# EUROPÄISCHE PATENTSCHRIFT

(11) **EP 0 625 065 B1**
(45) Veröffentlichungstag und Bekanntmachung des Hinweises auf die Patenterteilung: **15.05.1996**
(21) Anmeldenummer: 93924491.9
(22) Anmeldetag: 19.11.1993
(51) Int. Cl.: B01D 25/12, B01D 25/28, B01D 35/18

(54) **ANLAGE ZUR VERARBEITUNG EINER TRÜBE SOWIE VERWENDUNGEN DERSELBEN**
HEAVY-LIQUID PROCESSING INSTALLATION AND ITS USE
INSTALLATION PERMETTANT DE TRAITER UN LIQUIDE DENSE, ET SES UTILISATIONS

(30) Priorität: 04.12.1992 CH 3735/92; 04.11.1993 CH 3319/93
(43) Veröffentlichungstag der Anmeldung: 23.11.1994
(73) Patentinhaber: Bertrams AG, 4051 Basel (CH)
(72) Erfinder: AIGELDINGER, Jean-Claude, CH-5265 Wittnau (CH); HOFFMANN, Egon, D-79618 Rheinfelden (DE)
(74) Vertreter: EGLI-EUROPEAN PATENT ATTORNEYS
(86) Internationale Anmeldenummer: CH9300263
(87) Internationale Veröffentlichungsnummer: WO9413382

(56) Entgegenhaltungen:
- EP-A- 0 166 715
- EP-A- 0 178 389
- EP-A- 0 263 197
- DE-A- 3 713 419
- DE-A- 3 901 851

## Beschreibung

Die Erfindung betrifft eine Anlage zur Verarbeitung einer Trübe gemäss dem Oberbegriff des Anspruchs 1 sowie Verfahren, welche das Vermeiden der sogenannten thermoplastischen Phase zum Ziel haben, zum Betrieb derselben.

Derartige Anlagen werden in der Schlammentwässerungstechnik, insbesondere in der Lebensmitteltechnik und in der Pharmatechnik, aber auch bei der Entsorgung von Klärschlamm und dergleichen zur Sonderung des in der Trübe enthaltenen Feststoffanteils vom flüssigen Anteil verwendet.

Es sind auch entsprechende Anlagen bekannt, welche neben einer Kammerfilterpresse ein Heizaggregat und eine Saug- oder Vakuumpumpe umfassen (DE-A-3 901 851, EP-A-0 263 197), doch dient die letztere nur zum Absaugen des Filtrats, also zum Beschleunigen des Filtrierungsvorganges. Keines dieser Patente weist auf eine Methode hin, mit welcher die thermoplastische Phase umgangen werden kann.

Bei vielen Anwendungen wird der Filterkuchen, der sich in der Kammerfilterpresse aus den in der Trübe enthaltenen Schwebstoffen bildet, weiterverarbeitet, insbesondere getrocknet. Dazu muss er in herkömmlichen Anlagen aus der Filterpresse entfernt und in eine Trocknungsanlage umgefüllt werden, was, zieht man die nötigen Reinigungen und die vor allem im medizintechnischen Bereich meist erforderliche Sterilhaltung des Filterkuchens in Betracht, eine sehr aufwendige Operation darstellt.

Im Besonderen stellt die Entfernung des Filterkuchens aus der Kammerfilterpresse oft ein grosses Problem dar: Im Filterkuchen kann es, im Laufe der Trocknung, zur Bildung einer sogenannten thermoplastischen Phase kommen. Der Kuchen präsentiert sich dann als eine zähflüssige, äusserst klebrige Substanz, welche nur mit grösster Mühe von den gegebenenfalls verwendeten Filtertüchern abgelöst werden kann. Im US Patent Nummer 4,999,118, von Beltcho A. Beltchev, Sofia, Bulgarien, vom 12. März 1991, wird dieses Problem in der Beschreibung erwähnt. Als ungeeignetes Mittel zur Entfernung des klebrigen Filterkuchens wird dann ein "Schaber" zitiert. Es werden aber nur Nachteile dieses Schabers aufgeführt. In der ganzen Patentschrift fehlt ein weiterer Hinweis auf die Problematik der thermoplastischen Phase; eine Lösung wird, wie auch in allen anderen bekannten Patenten, nicht angeboten.

Der Erfindung liegt daher die Aufgabe zu Grunde, eine Ausgestaltung derartiger Anlagen anzugeben, welche mit geringem zusätzlichem Aufwand eine in diesem Sinne weitergehende Verarbeitung der Trübe (bzw. des Filterkuchens) erlaubt, sowie eine Kombination von Verfahren oder Prozessen, zu ihrem Betrieb, welche besondere Vorteile bieten.

Durch die Erfindung, wie sie in den Ansprüchen (besondere Ausführungsformen sind in den abhängigen Ansprüchen ausgeführt) gekennzeichnet ist, wird eine Anlage geschaffen, in welcher eine Weiterverarbeitung, insbesondere eine gezielte (durch das Steuern der Parameter Druck und Temperatur in der Kammerfilterpresse) und schonende Trocknung des Filterkuchens ohne Entnahme desselben aus der Kammerfilterpresse möglich wird. Durch das Vermeiden der thermoplastischen Phase kann die Entnahme des Filterkuchens automatisiert erfolgen, da keine Gefahr des Klebenbleibens mehr besteht. Dadurch wird eine weitestgehende Verarbeitung der Trübe in einer verhältnismässig einfachen Anlage ermöglicht. Dank der einfachen Entnahmemöglichkeit wird der Ablauf des Verfahrens wesentlich vereinfacht und verbilligt. Dadurch kann die Anlage sehr kompakt angelegt und fahrbar gestaltet werden.

Bei erfindungsgemässen Anlagen wird der Umstand, dass der Filterkuchen in einer Kammerfilterpresse ohnedies so anfällt, dass er eine grosse Oberfläche bietet - dies ist auch im Interesse eines raschen Filtrationsprozesses nötig - auch in anschliessenden Verfahrensschritten benutzt. So ist eine Kammerfilterpresse für die Behandlung des Filterkuchens mittels Unterdruck bestens geeignet, aber auch für Kontaktbeheizung des Filterkuchens (Kontakttrocknung) eignet sie sich hervorragend. Für eine Beheizung durch Heissgas (Konvektionstrocknung) herrschen ebenfalls günstige Voraussetzungen, da für eine feine Verteilung desselben die Speiseleitung oder die Filtratleitung mit ihren Verzweigungen oder beide benutzt werden können.

Im folgenden wird die Erfindung anhand von nur einem Ausführungsbeispiel darstellenden Figuren näher erläutert. Es zeigen
- Fig. 1: eine schematisierte Seitenansicht einer erfindungsgemässen Anlage,
- Fig. 2a: eine schematisierte Draufsicht auf die Anlage nach Fig. 1,
- Fig. 2b: eine Draufsicht entsprechend Fig. 2a, wobei jedoch die oberen Aggregate entfernt sind,
- Fig. 3: einen schematischen Längsschnitt durch einen Teil der Anlage nach Fig. 1, 2a, 2b,
- Fig. 4: eine diagrammatische Prinzipdarstellung der Anlage nach Fig. 1, 2a, 2b,
- Fig. 5: die zeitliche Veränderung verschiedener Parameter bei Filtration und anschliessender Trocknung des Filterkuchens für z.B. Klärschlamm und
- Fig. 6: die zeitliche Veränderung verschiedener Parameter bei Filtration und anschliessender Gefriertrocknung des Filterkuchens für z.B. Obst und Gemüse.

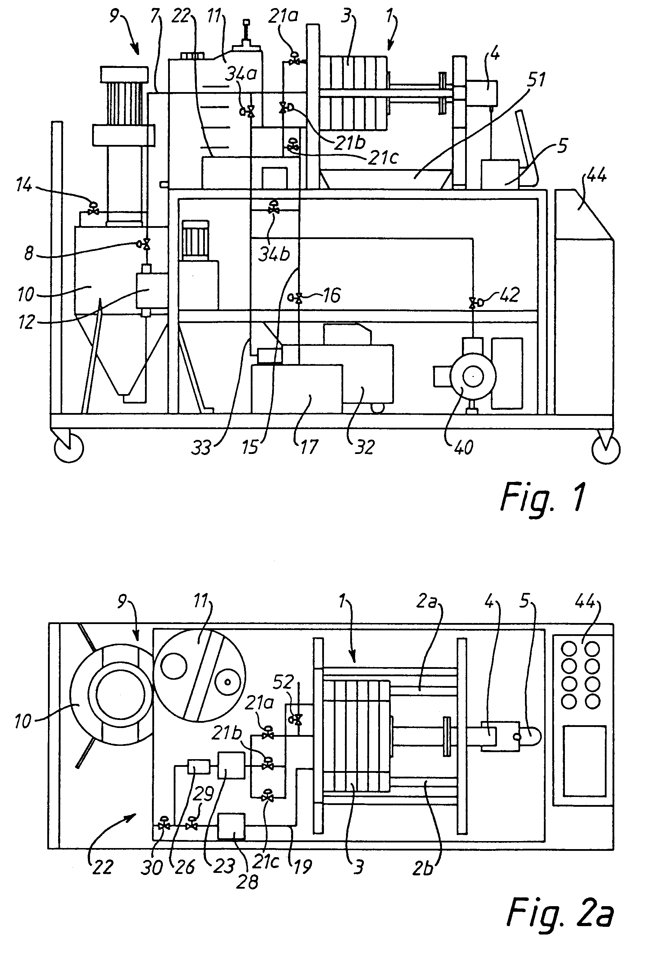

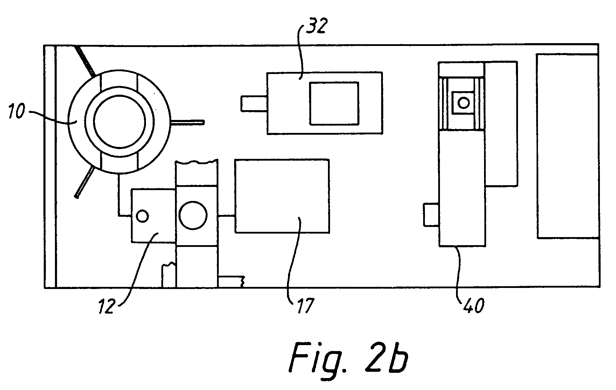

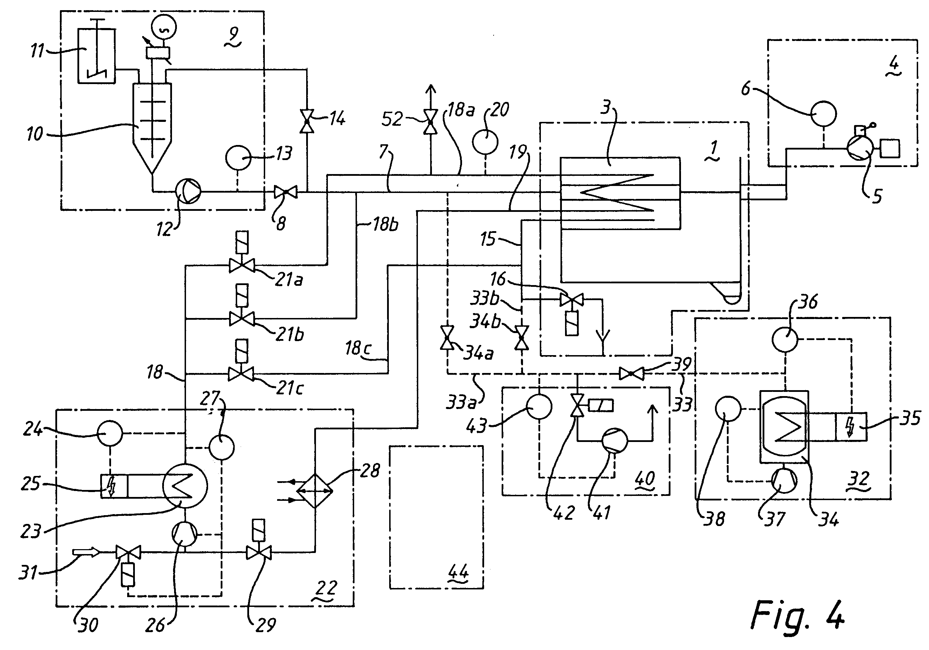

Im folgenden wird der prinzipielle Aufbau der Anlage unter Bezugnahme insbesondere auf Fig. 4 erläutert, welche die Aggregate mit ihren Komponenten und die Verbindungen zwischen ihnen in allen Einzelheiten zeigt, während Fig. 1, 2a, 2b vor allem eine Möglichkeit der räumlichen Anordnung der Aggregate zur Darstellung bringen soll.

Die Anlage weist in ihrem oberen Teil eine Kammerfilterpresse 1 auf mit an Holmen 2a,b (Fig. 1, 2a) aufgehängten Kammerfilterplatten 3, welche durch ein Hydraulikaggregat 4 mit einer Pumpe 5 und einem Drucksensor 6 aneinandergedrückt werden können. Sie ist über eine Speiseleitung 7 und ein Ventil 8 mit einem Speisesystem 9 verbunden, das einen Rührbehälter 10 und einen demselben vorgeschalteten Flockungsreaktor 11 umfasst, sowie eine dem Rührbehälter 10 nachgeschaltete Beschickungspumpe 12, die als Kolbenmembranpumpe oder Schraubenzentrifugalradpumpe ausgebildet sein kann und einen zu ihrer Regelung zwischen derselben und dem Ventil 8 angeordneten Drucksensor 13. Über eine Rückleitung mit einem weiteren Ventil 14 ist die Speiseleitung 7 nochmals mit dem Rührbehälter 10 verbunden.

Damit ein Absetzen des Feststoffanteils vermieden wird, kann die Speiseleitung 7 statt wie dargestellt in mittlerer Höhe auch unten oder oben in die Kammerfilterpresse 1 münden oder es können mehrere Mündungen vorhanden sein, zwischen denen umgeschaltet wird. So können Feststoffsuspensionen, bei denen der Feststoffanteil zur Sedimentation neigt, von oben und solche, bei denen er zur Flotation neigt, von unten zugeführt werden.

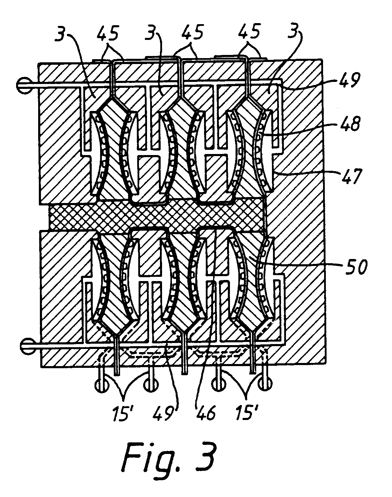

Die Kammerfilterpresse 1 ist über eine Filtratleitung 15 mit einem regelbaren Ventil 16 mit einem Filtratbehälter 17 (Fig. 1, 2b) verbunden. Da sie einen Hohlkörper 48 aufweist - was weiter unten im Zusammenhang mit Fig. 3 noch näher erläutert werden wird - ist sie auch an einen ersten Zweig 18a einer Druckleitung 18 und eine Rückleitung 19 angeschlossen. Die Druckleitung 18, welche mit ihren Verzweigungen zugleich eine Heizleitung darstellt, wird von einem Temperaturfühler 20 überwacht und ist mit einem Entlüftungsventil 52 ausgerüstet. Sie führt über ein regelbares Ventil 21a zu einem Heissdampfaggregat 22, genauer zum Ausgang eines Dampfkessels 23 desselben. Das Heissdampfaggregat 22 weist ausserdem einen Temperaturregler 24 auf, der die Leistung einer elektrischen Heizeinrichtung 25 zur Beheizung des Dampfkessels 23 auf Grund der Temperatur in der Druckleitung 18 regelt, sowie eine Kondensatpumpe 26, welche in ähnlicher Weise von einem Druckregler 27 geregelt wird und einen Kondensator 28, über den die Rückleitung 19 unter Zwischenschaltung eines regelbaren Ventils 29 mit dem Eingang der Kondensatpumpe 26 verbunden ist. Der letzteren ist ausserdem über ein vom Druckregler 27 geregeltes Ventil 30 ein Wasseranschluss 31 vorgeschaltet. Statt des Heissdampfaggregates könnte auch ein Heisswasser- oder sonst ein Wärmeträgeraggregat vorgesehen sein. Die Druckleitung 18 hat zwei weitere Zweige 18b und 18c, die über regelbare Ventile 21b und 21c in die Speiseleitung 7 bzw. die Filtratleitung 15 münden.

Neben dem Heissdampfaggregat 22 weist die Anlage eine weitere Heizvorrichtung auf nämlich ein Heissluftaggregat 32, welches über einen in die Speiseleitung 7 mündenden Zweig 33a mit einem Ventil 34a und einen in die Filtratleitung 15 mündenden Zweig 33b mit einem Ventil 34b einer Druckleitung 33, welche mit ihren Verzweigungen zugleich eine Heizleitung darstellt, mit der Kammerfilterpresse 1 verbunden ist. Das Heissluftaggregat 32 umfasst ein von Druckluft durchströmtes Heizgerät 34 mit einer Heizeinrichtung 35, die von einem Temperaturregler 36 geregelt wird. Die Druckluft wird von einer Druckpumpe 37 erzeugt, die dem Heizgerät 34 vorgeschaltet ist und von einem Druckregler 38 geregelt wird, so dass das Heissluftaggregat 32 zugleich ein Druckluftaggregat darstellt.

Vom Heissluftaggregat 32 durch ein Ventil 39 getrennt, ist mit der Druckleitung 33 ausserdem eine Vakuumanlage 40 verbunden, so dass die Druckleitung 33 zugleich als Evakuierungsleitung dient. Die Vakuumanlage 40 umfasst eine Vakuumpumpe 41, der ein regelbares Ventil 42 nachgeschaltet ist sowie einen Druckregler 43, der die Vakuumpumpe 41 in Abhängigkeit vom in der Druckleitung 33 herrschenden Druck regelt.

Die beschriebene Anlage wird von einer Steuerung 44 gesteuert, von der aus manuell oder nach einem wählbaren Programm die Ventile geöffnet und geschlossen und die einzelnen Aggregate und Anlagen etwa durch Vorgabe bestimmter Drücke und Temperaturen gesteuert werden. Vorzugsweise sollen in der Kammerfilterpresse 1 mittels der in das Heissluftaggregat 32 integrierten Druckpumpe 37 und der Vakuumpumpe 41 Drücke von ca. 0,1 mbar bis ca. 16 bar einstellbar sein sowie durch Einsatz des Heizgeräts 34 oder des Heizkessels 23 Temperaturen zwischen -45°C und 250°C, wobei Temperaturen unterhalb der Umgebungstemperatur mittels der Vakuumpumpe 41 erreicht werden, so dass ein Kühlaggregat nicht erforderlich ist. Selbstverständlich kann die beschriebene Anlage jedoch bei Bedarf auch mit einem solchen Aggregat ausgerüstet werden. Die Vakuumpumpe 41 ist mit einem Kondensator versehen, in dem abgezogene Brüden zur Verringerung ihres Volumens kondensiert oder desublimiert werden.

Fig. 3 zeigt im Längsschnitt das Kernstück der Kammerfilterpresse 1, nämlich die Kammerfilterplatten 3, welche mit für Flüssigkeiten durchlässigen Filtertüchern 45 bespannt sind und vom Hydraulikaggregat 4 zusammengepresst werden. Die Kammerfilterplatten 3 sind mittig mit eine Fortsetzung der Speiseleitung 7 bildenden durchgehenden Öffnungen 46 versehen und weisen beidseitig Vertiefungen 47 auf, an deren Grund jeweils ein Hohlkörper 48 angeordnet ist. Die Vertiefungen 47 bilden durch die Öffnungen 46 verbundene Kammern, in deren unteren Bereich Zweige 15' der Filtratleitung 15 münden. Die Kammern sind durch die Filtertücher 45 vollständig ausgekleidet. Die Kammerfilterplatten 3 weisen ausserdem Druckkanäle 18 auf welche hinter den Hohlräumen 48 münden und mit dem Zweig 18a der Druckleitung 18 und mit der Rückleitung 19 verbunden sind.

Die Kammerfilterpresse 1 kann auch mit Kammerfilterplatten ohne Membran ausgestattet sein, in welchem Fall die Druckkanäle in Hohlräume in derselben münden, welche z. B. von eingegossenen Hohlkörpern gebildet werden und über den Zweig 18a der Druckleitung 18 und die Rückleitung 19 von einem Dampfkreislauf durchströmt werden können, der durch den Kondensator 28, die Kondensatpumpe 26 und den Dampfkessel 23 geschlossen ist. In beiden Fällen kann durch eingeleiteten Dampf ein Aufheizen des Filterkuchens 50 durch direkten oder jedenfalls, da die Filtertücher 45 nur eine dünne Zwischenschicht bilden, nahezu direkten Kontakt erzielt werden, im einen Fall Kontakt mit den Hohlräumen 48, im anderen mit den Kammerfilterplatten selber, welche mindestens im letzteren Fall wegen der höheren Wärmeleitfähigkeit dieses Materials aus Metall bestehen sollten, das auch wegen seiner Hitzebeständigkeit vorzuziehen ist, obwohl diesbezüglich auch Kunststoffplatten für viele Anwendungen genügen. Auch eine elektrische Beheizung der Filterplatten kann natürlich vorgesehen werden.

Unterhalb der Kammerfilterpresse 1 ist eine Wanne 51 (Fig. 1) angeordnet zur Aufnahme des Filterkuchens 50 nach dem Öffnen der Kammerfilterpresse 1. Die Anlage ist in einem verhältnismässig Kleinen Volumen von ca. 2 × 1,4 × 0,8 m³ untergebracht und fahrbar.

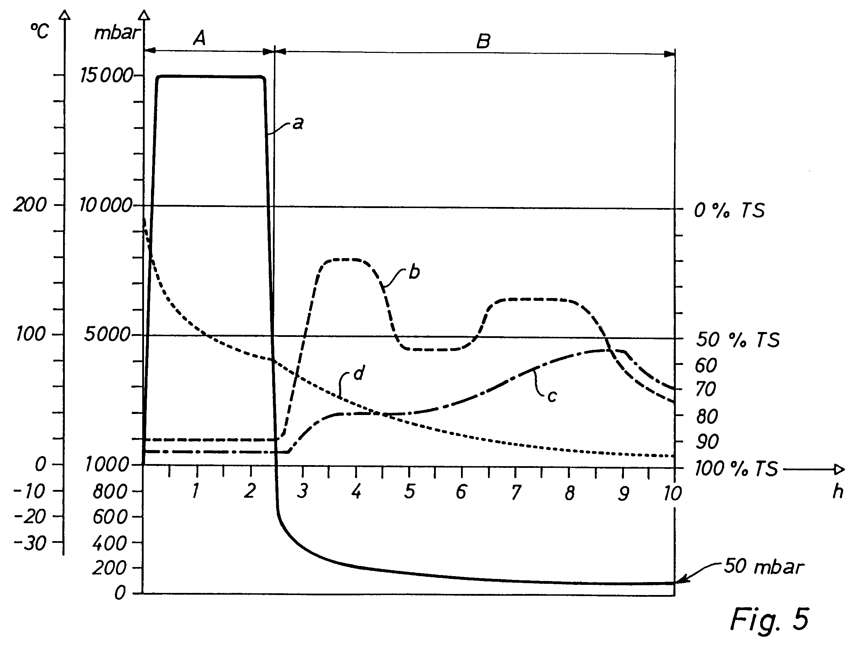

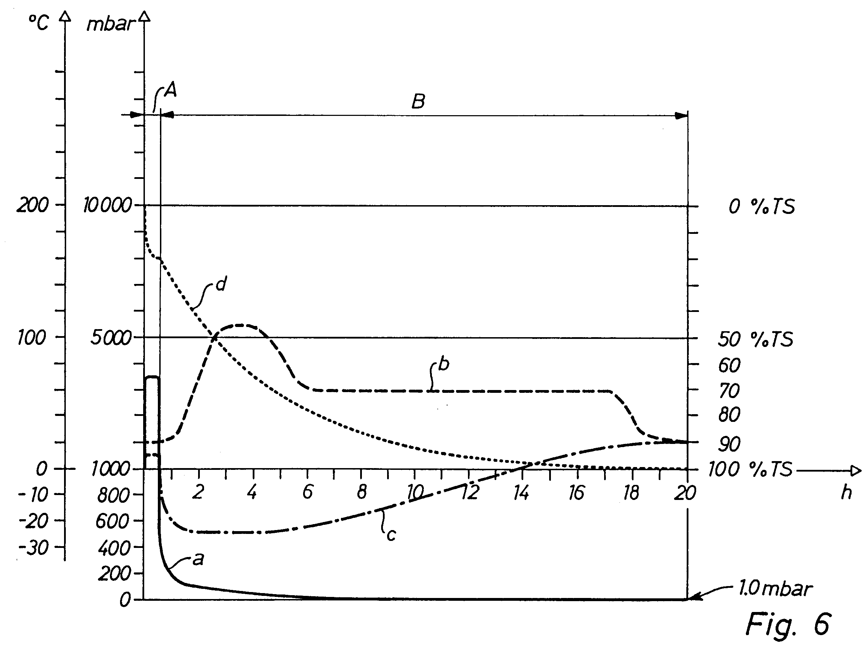

Die Anlage kann (Fig. 5, 6) dazu verwendet werden, einen Filterkuchen 50 herzustellen und denselben nachzubehandeln, insbesondere zur Herstellung eines je nachdem rieselfähigen oder stückigen Stoffs - in Frage kommen Farben, Pharmaka, Suppen- und Getränkepulver, Gemüse- und Fruchtsnacks und vieles andere -, wobei für die Nachbehandlung verschiedene Kombinationen möglich sind. Die Anlage eignet sich besonders gut für Verfahren, die Filtration A des Filterkuchens 50 mit anschliessender Trocknung B desselben in der Kammerfilterpresse 1 umfassen. Zuerst wird im Flockungsreaktor 11 eine Trübe angesetzt und kontinuierlich in den Rührbehälter 10 geleitet und dort so lange wie erforderlich gerührt. Dann wird das Ventil 8 geöffnet und die Beschickungspumpe 12 eingeschaltet. Dadurch wird Trübe in die Kammerfilterpresse 1 transportiert, bis (s. unten) nur noch wenig Filtrat austritt, weil sich in der Kammerfilterpresse 1 ein fester Filterkuchen gebildet hat. Anschliessend wird das Ventil 8 geschlossen und das Ventil 14 sowie die Ventile 39 und 34a geöffnet und die Speiseleitung 7 mittels der Pumpe 37 ausgeblasen. Während des Füllens der Kammerfilterpresse 1 läuft durch Einwirkung der Schwerkraft der grösste Teil des Filtrats durch die Filtratleitung 15 in den Filtratbehälter 17 ab. Durch Öffnen des Ventils 21a und Einschalten der Kondensatpumpe 26 wird über den ersten Zweig 18a der Druckleitung 18 Wasser oder auch Dampf in die Druckkanäle 49 der Kammerfilterpresse 1 geleitet, so dass die Hohlräume 48 sich erhitzen. Anschliessend wird über die Rückleitung 19 Wasser oder Dampf abgelassen.

Die weitere Behandlung richtet sich ebenso wie bestimmte Parameter bei der Filtration A nach der Art der Trübe und dem beabsichtigten Endresultat, zwei ausgewählte Beispiele sollen dies dokumentieren.

Im Beispiel von Fig. 5 handelt es sich bei der Trübe um eine Chemiesuspension, Mineralschlamm, Klärschlamm oder Rauchgaswaschschlamm von zwischen 0,5% und 35% (Gew.) - im gezeigten Beispiel ca. 5% - Trockensubstanz (TS). Der Druck a im Inneren der Kammerfilterpresse 1 wird bei der Filtration auf 15 bar angehoben und ca. 2,5 h gehalten.

Wenn der Filtratfluss unter eine bestimmte Grenze gefallen ist, beginnt die Trocknung B, genauer gesagt, Vakuumtrocknung des Filterkuchens in der Kammerfilterpresse 1. Dazu wird die Vakuumanlage 40 in Betrieb gesetzt und der Druck a im Inneren der Kammerfilterpresse 1 auf einen Wert zwischen 5 und 100 mbar, im gezeigten Beispiel 50 mbar gesenkt und gehalten. Ausserdem wird durch die Heizeinrichtung 25 der Heizkessel 23 geheizt und Dampf erzeugt und schliesslich die Ventile 21a geöffnet, so dass durch Einfliessen von Dampf in die Druckkanäle 18 über die Hohlräume 48 der Kammerfilterplatten 3, deren Plattentemperatur b auf zwischen 140°C und 200°C, im vorliegenden Fall 160°C gebracht und somit der Filterkuchen 50 erwärmt wird.

Die Kuchentemperatur c bleibt dabei wegen der Verdampfung stets unter 50°C. Der Filterkuchen schäumt auf und wird feinporig, was er bei geeigneter Führung der Parameter Druck a und Plattentemperatur b im weiteren Verlauf auch bleibt. Wenn die Verdampfüng abnimmt, kann beispielsweise die Temperatur der Kammerfilterplatten 3 auf ca. 70°C zurückgenommen werden. Die Kuchentemperatur c darf so lange nicht über 60°C steigen, als der Gehalt an Trockensubstanz d zwischen 65% und 85% liegt, da der Filterkuchen 50 sonst in die thermoplastische Phase - auch Leimphase genannt - eintritt und eine pastöse Konsistenz annimmt, so dass er klumpig wird und auch mit den Kammerfilterplatten 3 verklebt. Nach Überschreiten der Grenze von beispielsweise 85% TS kann die Plattentemperatur beispielsweise auf 140°C erhöht und nach ca. 2 h die Heizung abgestellt werden. Der Filterkuchen 50 wird während weiterer 2 h durch den Unterdruck und das Einwirken der, in den Platten und im Produkt selbst enthaltenen, latenten Wärme weiter getrocknet bis auf ca. 95% TS, während die Kuchentemperatur c auf ca. 70°C absinkt. Anschliessend wird der Druck a normalisiert und die Kammerfilterpresse 1 geöffnet.

Bei einem weiteren Verfahren wird (Fig. 6) bei der nur ca. 15 min. dauernden Filtration einer Feststoffsuspension aus Lebensmittel-, Pharma- oder Chemieproduktion, z. B. von Obst- oder Gemüsestücken in 5-fachem bis 20-fachem Flüssigkeitsüberschuss ein Maximaldruck von 2 - 6, im vorliegenden Fall 3,5 bar nicht überschritten. Zur anschliessenden Gefriertrocknung wird der Druck a auf 0,5 bis 2 mbar, hier 1 mbar - in jedem Fall unter den Tripelpunktsdruck von Wasser - abgesenkt und der Filterkuchen 50 dadurch stark abgekühlt. Die Kuchentemperatur c sinkt auf ca. -20°C, so dass der Wasseranteil, soweit er nicht bereits verdampft ist, in die feste Phase übergeht. So bleibt auch hier der Filterkuchen locker und die weitere Entwässerung ist nicht behindert.

Anschliessend wird die Plattentemperatur b auf 80 bis 110°C angehoben und später auf ca. 70°C zurückgenommen, damit wird auch die Kuchentemperatur c langsam erhöht, so dass der Wasseranteil am Filterkuchen 50 zunehmend sublimiert wird und der Gehalt an Trockensubstanz d sich auf 98 bis 99% erhöht. Die Erniedrigung der Plattentemperatur b auf ca. 70°C erfolgt zur Schonung des Filterkuchens mindestens dann, wenn die Verdampfüng nicht mehr ausreicht, eine Erhöhung der Kuchentemperatur c auf über 50°C zu verhindern.

Die Grenze zwischen Vakuum- und Gefriertrocknung ist im wesentlichen durch den Druckverlauf gegeben, sie liegt streng genommen beim Tripelpunktsdruck von Wasser, der bei destilliertem Wasser 6,3 mbar beträgt, aber je nach Salz- oder Zuckergehalt auch mehr oder weniger weit darunter liegen kann. Es ist natürlich nicht ausgeschlossen, auch Schlämme und dergleichen einer Gefriertrocknung zu unterwerfen, jedoch ist dieser höhere Aufwand gewöhnlich nicht notwendig, während er sich bei sensibleren Produkten, die natürlich umgekehrt auch einer Vakuumtrocknung unterzogen werden können, meist lohnt.

Bei beiden Verfahren kann die Trocknung des Filterkuchens 50 überwacht und Druck und Temperatur nach dem Trocknungsgrad geregelt werden. Besagte Überwachung ist z. B. durch eine oder mehrere der folgenden Massnahmen möglich:
- Messung der Temperatur im Inneren des Filterkuchens 50,
- Messung der Kondensatmenge die im Kondensator der Vakuumpumpe 41 entsteht,
- Überwachung des Druckverlaufs während der Trocknung.
Als zusätzlicher Schritt kann z. B., vor allem bei einer Anwendung im pharmazeutischen Bereich und bei geeigneter Ausrüstung der Anlage, nach der Filtration A Sterilisierung durch Heissdampf durchgeführt werden. Dazu wird bei geöffneten Ventilen 21b und 21c Dampf durch die Zweige 18b,c der Druckleitung 18 von der Kondensatpumpe 26 in die Kammerfilterpresse 1 gepumpt. Nach Schliessen der Ventile 21b,c kann dann der Filterkuchen 50 durch Heissluft aus dem Heissluftaggregat 32, die über die Zweige 33a,b der Druckleitung 33 bei geöffneten Ventilen 34a,b in die Kammerfilterpresse 1 einströmt, vorgetrocknet werden. Die Trocknung B kann dann wie beschrieben durch Vakuumtrocknung oder Gefriertrocknung vervollständigt werden.

## Patentansprüche

1. Anlage zur Verarbeitung einer Trübe mit einer Kammerfilterpresse (1) zur Filtration derselben sowie einer Speiseleitung (7) zur Zuführung der Trübe und einer Filtratleitung (15) zur Abführung des Filtrats, **dadurch gekennzeichnet, dass** die Anlage Mittel zur Vermeidung der thermoplastischen Phase des Filterkuchens, durch Herstellung von geregeltem Unterdruck und geregelten Temperaturen, im Inneren der Kammerfilterpresse (1) aufweist.

2. Anlage nach Anspruch 1, **dadurch gekennzeichnet, dass** die Mittel zur Herstellung eines geregelten Unterdrucks bis zu 100 mbar im Inneren der Kammerfilterpresse (1) geeignet sind.

3. Anlage nach Anspruch 2, **dadurch gekennzeichnet, dass** die Mittel zur Herstellung eines geregelten Unterdrucks bis zu 7 mbar im Inneren der Kammerfilterpresse (1) geeignet sind.

4. Anlage nach Anspruch 3, **dadurch gekennzeichnet, dass** die Mittel zur Herstellung eines geregelten Unterdrucks bis zu 0,5 mbar im Inneren der Kammerfilterpresse (1) geeignet sind.

5. Anlage nach einem der Ansprüche 1 bis 4, **dadurch gekennzeichnet, dass** die Mittel zur Herstellung eines geregelten Unterdrucks eine Vakuumpumpe (41) umfassen, welche über eine Evakuierungsleitung mit dem Inneren der Kammerfilterpresse (1) verbunden ist.

6. Anlage nach Anspruch 5, **dadurch gekennzeichnet, dass** die Evakuierungsleitung in die Speiseleitung (7) mündet.

7. Anlage nach einem der Ansprüche 5 oder 6, **dadurch gekennzeichnet, dass** die Evakuierungsleitung in die Filtratleitung (15) mündet.

8. Anlage nach einem der Ansprüche 1 bis 7, **dadurch gekennzeichnet, dass** sie Mittel zur Veränderung der Temperatur der Kammerfilterplatten (3) aufweist.

9. Anlage nach Anspruch 8, **dadurch gekennzeichnet, dass** die Mittel zur Veränderung der Temperatur mindestens eine Heizvorrichtung umfassen.

10. Anlage nach Anspruch 9**, dadurch gekennzeichnet, dass** mindestens eine Heizvorrichtung zur Heizung eines fluiden Mediums geeignet ist und eine Heizleitung vorhanden ist, mittels welcher das Medium der Kammerfilterpresse (1) zugeleitet werden kann.

11. Anlage nach Anspruch 10, **dadurch gekennzeichnet, dass** die Heizleitung in Hohlräume der Kammerfilterplatten (3) mündet.

12. Anlage nach Anspruch 10 oder 11, **dadurch gekennzeichnet, dass** eine Heizvorrichtung als Heissdampfaggregat (22), als Heisswasseraggregat oder als Wärmeträgeraggregat ausgebildet ist.

13. Anlage nach Anspruch 10 oder 11, **dadurch gekennzeichnet, dass** eine Heizvorrichtung als Heissluftaggregat (32) ausgebildet ist.

14. Anlage nach einem der Ansprüche 10 bis 13, **dadurch gekennzeichnet, dass** die Kammerfilterpresse (1) eine Druckleitung (18a) aufweist, welche zu den Hohlräumen 48 zwischen Kammerfilterplatten (3) mündet und dass die Heizleitung in die Druckleitung (18a) mündet.

15. Anlage nach Anspruch einem der Ansprüche 11 bis 13, **dadurch gekennzeichnet, dass** die Kammerfilterplatten (3) gegossen und die Hohlräume von eingegossenen Hohlkörpern aus Metall umschlossen sind.

16. Anlage nach einem der Ansprüche 1 bis 15, **dadurch gekennzeichnet, dass** die Speiseleitung (7) von einem Speisesystem (9) ausgeht welches einen Rührbehälter (10) umfasst.

17. Anlage nach Anspruch 16, **dadurch gekennzeichnet, dass** dem Rührbehälter (10) ein Flockungsreaktor (11) vorgeschaltet ist.

18. Anlage nach einem der Ansprüche 1 bis 17, **dadurch gekennzeichnet, dass** sie zur Beschickung der Kammerfilterpresse (1) eine Beschickungspumpe (12) mit Schraubenzentrifugalrad aufweist.

19. Anlage nach einem der Ansprüche 1 bis 18, **dadurch gekennzeichnet, dass** sie fahrbar ausgebildet ist.

20. Verfahren zum Betrieb einer Anlage nach einem der Ansprüche 1 bis 19, **dadurch gekennzeichnet, dass** zur Herstellung und Trocknung eines Filterkuchens eine Suspension in die Kammerfilterpresse (1) eingespeist, filtriert und anschliessend der Filterkuchen getrocknet wird, indem der Druck im Inneren der Kammerfilterpresse (1) unter einen oberen Grenzdruck von höchstens 200 mbar abgesenkt und die Temperatur der Kammerfilterplatten (3) über eine untere Grenztemperatur von mindestens 40°C gebracht wird und durch Regelung von Druck und Temperatur die thermoplastische Phase des Filterkuchens vermieden wird.

21. Verfahren nach Anspruch 20, **dadurch gekennzeichnet, dass** der Druck im Inneren der Kammerfilterpresse (1) und die Temperatur der Kammerfilterplatten (3) nach dem Trocknungsgrad des Filterkuchens (50) geregelt werden.

22. Verfahren nach Anspruch 20 oder 21, **dadurch gekennzeichnet, dass** bei der Trocknung der Druck im Inneren der Kammerfilterpresse (1) über einem unteren Grenzdruck von 5 mbar und die Temperatur der Kammerfilterplatten (3) zwischen einer unteren Grenztemperatur von 70°C und einer oberen Grenztemperatur von 200°C gehalten wird.

23. Verfahren nach Anspruch 22, **dadurch gekennzeichnet, dass** die Suspension eine Chemiesuspension, einen Mineralschlamm, einen Klärschlamm oder einen Rauchgaswaschschlamm umfasst.

24. Verfahren nach Anspruch 20 oder 21, **dadurch gekennzeichnet, dass** bei der Trocknung der Druck im Inneren der Kammerfilterpresse (1) unter einem oberen Grenzdruck von 7 mbar und die Temperatur der Kammerfilterplatten (3) zwischen einer unteren Grenztemperatur von 40°C und einer oberen Grenztemperatur von 160°C gehalten wird.

25. Verfahren nach Anspruch 24, **dadurch gekennzeichnet, dass** die Suspension eine Feststoffsuspension aus einer Lebensmittelproduktion, vorzugsweise von Gemüse oder Früchten, aus einer Pharmaproduktion oder einer Chemieproduktion ist.

26. Verfahren nach einem der Ansprüche 20 bis 25, **dadurch gekennzeichnet, dass** bei der Trocknung der Druck im Inneren der Kammerfilterpresse (1) und die Temperatur der Kammerfilterplatten (3) so geführt werden, dass die Temperatur des Filterkuchens 60°C nicht überschreitet, solange der Trockenstoffgehalt zwischen 45% und 85% liegt.

27. Verfahren nach Anspruch 25 oder 26, **dadurch gekennzeichnet, dass** bei der Trocknung der Druck im Inneren der Kammerfilterpresse (1) und die Temperatur der Kammerfilterplatten (3) so geführt werden, dass die Temperatur des Filterkuchens 50°C nicht überschreitet.

## Claims

1. Plant for processing a slurry having a chamber filter press (1) for the filtration of the same and a feed line (7) for feeding the slurry and a filtrate line (15) for discharging the filtrate, characterized in that the plant is provided with means for avoiding the thermoplastic phase of the filter cake by producing a controlled reduced pressure and controlled temperatures in the interior of the chamber filter press (1).

2. Plant according to Claim 1, **characterized in that** the means are suitable for producing a controlled reduced pressure as far as 100 mbar in the interior of the chamber filter press (1).

3. Plant according to Claim 2, **characterized in that** the means are suitable for producing a controlled reduced pressure as far as 7 mbar in the interior of the chamber filter press (1).

4. Plant according to Claim 3, **characterized in that** the means are suitable for producing a controlled reduced pressure as far as 0.5 mbar in the interior of the chamber filter press (1).

5. Plant according to one of Claims 1 to 4, **characterized in that** the means for producing a controlled reduced pressure include a vacuum pump (41) which is connected via an evacuation line to the interior of the chamber filter press (1).

6. Plant according to Claim 5, **characterized in that** the evacuation line opens out into the feed line (7).

7. Plant according to one of Claims 5 or 6, **characterized in that** the evacuation line opens out into the filtrate line (15).

8. Plant according to one of Claims 1 to 7, **characterized in that** it has means for changing the temperature of the chamber filter plates (3).

9. Plant according to Claim 8, **characterized in that** the means for changing the temperature include at least one heating apparatus.

10. Plant according to Claim 9, **characterized in that** at least one heating apparatus is suitable for heating a fluid medium and a heating line is present by means of which the medium can be passed to the chamber filter press (1).

11. Plant according to Claim 10, **characterized in that** the heating line opens out into cavities of the chamber filter plates (3).

12. Plant according to Claim 10 or 11, **characterized in that** a heating apparatus is designed as a superheated steam unit (22), as a hot water unit or as a thermal transfer medium unit.

13. Plant according to Claim 10 or 11, **characterized in that** a heating apparatus is designed as a hot air unit (32).

14. Plant according to one of Claims 10 to 13, **characterized in that** the chamber filter press (1) has a pressure line (18a) which opens out to the cavities 48 between chamber filter plates (3) and in that the heating line opens out into the pressure line (18a).

15. Plant according to one of Claims 11 to 13, **characterized in that** the chamber filter plates (3) are cast and the cavities are enclosed by cast-in hollow bodies of metal.

16. Plant according to one of Claims 1 to 15, **characterized in that** the feed line (7) proceeds out from a feed system (9) which includes a stirred tank (10).

17. Plant according to Claim 16, **characterized in that** a flocculation reactor (11) is provided upstream of the stirred tank (10).

18. Plant according to one of Claims 1 to 17, **characterized in that** a charging pump (12) having a screw centrifugal impeller is provided for charging the chamber filter press (1).

19. Plant according to one of Claims 1 to 18, **characterized in that** it is designed to be mobile.

20. Method for the operation of a plant according to one of Claims 1 to 19, **characterized in that**, for producing and drying a filter cake, a suspension is fed into the chamber filter press (1) and filtered and then the filter cake is dried by the pressure in the interior of the chamber filter press (1) being reduced beneath an upper limit pressure of at most 200 mbar and the temperature of the chamber filter plates (3) being brought above a lower limit temperature of at least 40°C, and, by controlling pressure and temperature, the thermoplastic phase of the filter cake is avoided.

21. Method according to Claim 20, **characterized in that** the pressure in the interior of the chamber filter press (1) and the temperature of the chamber filter plates (3) are controlled by the degree of drying of the filter cake (50).

22. Method according to Claim 20 or 21, **characterized in** **that**, in the drying, the pressure in the interior of the chamber filter press (1) is maintained above a lower limit pressure of 5 mbar and the temperature of the chamber filter plates (3) is maintained between a lower limit temperature of 70°C and an upper limit temperature of 200°C.

23. Method according to Claim 22, **characterized in that** the suspension comprises a chemical suspension, a mineral sludge, a sewage sludge or a flue gas scrubber sludge.

24. Method according to Claim 20 or 21, **characterized in that**, in the drying, the pressure in the interior of the chamber filter press (1) is maintained beneath an upper limit pressure of 7 mbar and the temperature of the chamber filter plates (3) is maintained between a lower limit temperature of 40°C and an upper limit temperature of 160°C.

25. Process according to Claim 24, **characterized in that** the suspension is a solids suspension from food production, preferably of vegetables or fruit, from pharmaceutical production or chemical production.

26. Method according to one of Claims 20 to 25, **characterized in that**, in the drying, the pressure in the interior of the chamber filter press (1) and the temperature of the chamber filter plates (3) are directed so that the temperature of the filter cake does not exceed 60°C as long as the dry matter content lies between 45% and 85%.

27. Method according to Claim 25 or 26, **characterized in that**, in the drying, the pressure in the interior of the chamber filter press (1) and the temperature of the chamber filter plates (3) is directed so that the temperature of the filter cake does not exceed 50°C.

## Revendications

1. Installation pour traiter une boue liquide, comportant un filtre-presse à plateaux (1) pour la filtration de cette dernière et un conduit d'alimentation (7) pour alimenter la boue liquide, ainsi qu'un conduit de filtrat (15) pour évacuer le filtrat, caractérisée en ce que l'installation est munie de moyens pour éviter la phase thermoplastique du gâteau de filtre en procurant une pression réduite réglée et des températures réglées à l'intérieur du filtre-presse à plateaux (1).

2. Installation selon la revendication 1, caractérisée en ce que les moyens sont appropriés pour produire une pression réduite réglée allant jusqu'à 100 mbar à l'intérieur du filtre-presse à plateaux (1).

3. Installation selon la revendication 3, caractérisée en ce que les moyens sont appropriés pour produire une pression réduite réglée allant jusqu'à 7 mbar à l'intérieur du filtre-presse à plateaux (1).

4. Installation selon la revendication 3, caractérisée en ce que les moyens sont appropriés pour produire une pression réduite réglée allant jusqu'à 0,5 mbar à l'intérieur du filtre-presse à plateaux (1).

5. Installation selon l'une quelconque des revendications 1 à 4, caractérisée en ce que les moyens pour produire une pression réduite réglée englobent une pompe à vide (41) qui est reliée, via un conduit d'évacuation, à l'intérieur du filtre-presse à plateaux (1).

6. Installation selon la revendication 5, caractérisée en ce que le conduit d'évacuation s'ouvre dans le conduit d'alimentation (7).

7. Installation selon l'une quelconque des revendications 5 ou 6, caractérisée en ce que le conduit d'évacuation s'ouvre dans le conduit de filtrat (15).

8. Installation selon l'une quelconque des revendications 1 à 7, caractérisée en ce qu'elle comporte des moyens pour modifier la température des plateaux de filtre (3).

9. Installation selon la revendication 8, caractérisée en ce que les moyens pour modifier la température englobent au moins un appareil de chauffage.

10. Installation selon la revendication 9, caractérisée en ce qu'au moins un appareil de chauffage est approprié pour chauffer un milieu de fluide, et un conduit de chauffage est présent, à l'aide duquel le milieu peut passer dans le filtre-presse à plateaux (1).

11. Installation selon la revendication 10, caractérisée en ce que le conduit de chauffage s'ouvre dans des cavités pratiquées dans les plateaux de filtre (3).

12. Installation selon la revendication 10 ou 11, caractérisée en ce qu'un appareil de chauffage est conçu comme unité à vapeur surchauffée (22), comme unité à eau chaude ou comme unité à milieu de transfert thermique.

13. Installation selon la revendication 10 ou 11, caractérisée en ce qu'un appareil de chauffage est conçu comme unité à air chaud (32).

14. Installation selon l'une quelconque des revendications 10 à 13, caractérisée en ce que le filtre-presse à plateaux (1) comporte un conduit de pression (18a) qui s'ouvre sur les cavités (48) ménagées entre les plateaux de filtre (3) et en ce que le conduit de chauffage s'ouvre dans le conduit de pression (18a).

15. Installation selon l'une quelconque des revendications 11 à 13, caractérisée en ce que les plateaux de filtre (3) sont moulés et les cavités sont renfermées dans des corps creux métalliques moulés.

16. Installation selon l'une quelconque des revendications 1 à 15, caractérisée en ce que le conduit d'alimentation (7) provient d'un système d'alimentation (9) qui englobe une cuve agitée (10).

17. Installation selon la revendication 16, caractérisée en ce qu'on prévoit un réacteur de floculation (11) en amont de la cuve agitée (10).

18. Installation selon l'une quelconque des revendications 1 à 17, caractérisée en ce qu'une pompe de chargement (12) comportant une hélice centrifuge à vis est prévue pour charger le filtre-presse à plateaux (1).

19. Installation selon l'une quelconque des revendications 1 à 18, caractérisée en ce qu'elle est conçue pour être mobile.

20. Procédé pour la mise en service d'une installation selon l'une quelconque des revendications 1 à 19, caractérisé en ce que, pour produire et sécher un gâteau de filtre, on alimente une suspension dans le filtre-presse à plateaux (1) et on la filtre, ensuite on sèche le gâteau de filtre en réduisant la pression régnant à l'intérieur du filtre-presse à plateaux (1) en dessous d'une pression limite supérieure au maximum 200 mbar et en amenant la température des plateaux de filtre (3) au-dessus d'une température limite inférieure d'au moins 40°C, et en réglant la pression et la température, on évite la phase thermoplastique du gâteau de filtre.

21. Procédé selon la revendication 20, caractérisé en ce qu'on règle la pression régnant à l'intérieur du filtre-presse à plateaux (1) et la température des plateaux de filtre (3) par le degré de séchage du gâteau de filtre (50).

22. Procédé selon la revendication 20 ou 21, caractérisé en ce que, lors du séchage, on maintient la pression régnant à l'intérieur du filtre-presse à plateaux (1) au-dessus d'une pression limite inférieure de 5 mbar et on maintient la température des plateaux de filtre (3) entre une température limite inférieure de 70°C et une température limite supérieure de 200°C.

23. Procédé selon la revendication 22, caractérisé en ce que la suspension comprend une suspension chimique, des boues liquides minérales, des boues liquides d'eaux usées ou encore des boues liquides d'épuration de gaz brûlés.

24. Procédé selon la revendication 20 ou 21, caractérisé en ce que, lors du séchage, on maintient la pression régnant à l'intérieur du filtre-presse à plateaux (1) en dessous d'une pression limite supérieure de 7 mbar et on maintient la température des plateaux de filtre (3) entre une température limite inférieure de 40°C et une température limite supérieure de 160°C.

25. Procédé selon la revendication 24, caractérisé en ce que la suspension est une suspension de produits solides provenant de la production alimentaire, de préférence de légumes ou de fruits, de la production pharmaceutique ou de la production chimique.

26. Procédé selon l'une quelconque des revendications 20 à 25, caractérisé en ce que, lors du séchage, on dirige la pression régnant à l'intérieur du filtre-presse à plateaux (1) et la température des plateaux de filtre (3) de telle sorte que la température du gâteau de filtre ne dépasse pas 60°C tant que la teneur en matière sèche se situe entre 45% et 85%.

27. Procédé selon la revendication 25 ou 26, caractérisé en ce que, lors du séchage, on dirige la pression régnant à l'intérieur du filtre-presse à plateaux (1) et la température des plateaux de filtre (3) de telle sorte que la température du gâteau de filtre ne dépasse pas 50°C.
